# EUROPEAN PATENT APPLICATION

(11) **EP 4 560 034 A1**
(43) Date of publication of application: **28.05.2025**
(21) Application number: 23841490.8
(22) Date of filing: 30.03.2023
(51) Int. Cl.: C22B 23/02, C22B 1/02, C22B 1/14, C22B 5/12

(54) **METHOD FOR SMELTING NICKEL-CONTAINING OXIDE ORE**

(30) Priority: 21.07.2022 JP 2022116526; 20.01.2023 JP 2023007362
(71) Applicant: SUMITOMO METAL MINING CO., LTD., Tokyo 105-8716 (JP)
(72) Inventor: YAMASHITA, Yu, Niihama-shi, Ehime 792-0002 (JP); TAKAHASHI, Junichi, Tokyo 105-8716 (JP)
(74) Representative: Jones, Nicholas Andrew
(86) International application number: PCT/JP2023/013179
(87) International publication number: WO 2024/018692

(57) **Abstract**

Provided is a method for smelting nickel-containing oxide ore for which the generated amount of CO₂ is reduced and the nickel recovery ratio is high. The present invention is a method for smelting nickel-containing oxide ore, comprising: a hydrogen reduction step S3 in which a reduction treatment is carried out while supplying hydrogen, as a reducing agent, to a raw material including nickel-containing oxide ore; a melting step S4 for carrying out a melting treatment on the reduced product obtained by the reduction treatment; and a recovery step S5 for separating slag from the melted product obtained by the melting treatment and recovering metal including nickel. Also, the method preferably further includes a pelletizing step in which the raw material including nickel-containing oxide ore is pelletized. The pelletized raw material is subjected to the reduction treatment in the hydrogen reduction step.

## Description

### TECHNICAL FIELD

The present invention relates to a method for smelting an oxide ore containing nickel (nickel-containing oxide ore) .

### BACKGROUND ART

In order to solve the climate change problem, the Paris Agreement was adopted in COP21 in 2015, which led each country to take the greatest effort to keep the world's average temperature below plus 2°C compared to the world's average temperature before the industrial revolution. In 2021, Intergovernmental Panel on Climate Change (IPCC) explicitly says in the 6^{th} report, "There is no doubt that human influence has warmed the atmosphere, ocean and land" and thereafter the agreement "to make a decision to derive efforts to keep the world's average temperature increase to plus 1.5°C compared to the world's average temperature before industrial revolution" was made in COP26.

Among such international movements, the Japanese government has set up a target of '26% reduction in greenhouse gas emission by 2030 and 80% reduction by 2050 as a ratio compared to 1990' in 2016, and has newly set up a target of 'substantially zero emission by 2050' in 2020, and '46% reduction by 2030 as a ratio compared to 2013' in 2021, and the movement of the greenhouse gas emission reduction is also accelerating in Japan.

In non-iron smelting industry, a reduction in emissions in accordance with target values and a conversion to a carbon neutral process in 2050 have also been demanded, and new processes with low energy and low fossil fuel usage have been developed.

For example, in ferronickel smelting industry, an Elchem method is currently the mainstream. The Elchem method is a process in which a saprolite ore containing nickel oxide is pre-dried by a rotary kiln dryer, and even crystal water is dehydrated by gradually raising the temperature in the rotary kiln. Then, iron present in a trivalent form in the ore is reduced to divalent, and then almost the whole amount of nickel and some of iron are reduced to metal in an electric furnace to obtain an alloy. However, in the Elchem method, a burner of fossil fuel such as pulverized coal or heavy oil is used in a step of predrying with a dryer and a step of reducing in a rotary kiln, and coal is used as a reducing agent and a heat source, so that a large amount of CO₂ is generated. Note that the CO₂ generation amount is shown as about 22.4 t CO₂/t Ni.

Reduction by hydrogen is considered as a measure for reducing the amount of CO₂ generated. It is known that nickel oxide alone is easily reduced to metal by hydrogen. However, in hydrogen reduction of nickel in a nickel-containing oxide ore such as saprolite or limonite, a reduction degree is about 10% to 70%, which is significantly lower than 95% or more of the Elchem method. This is because nickel is widely dispersed in an olivine phase ((Mg,Fe)₂SiO₄) and/or a magnesiowustite phase ((Mg,Fe)O) and its activity is low. Therefore, a simple reduction with hydrogen alone results in a low nickel recovery ratio, and the Elchem method is industrially unfeasible.

As a measure for improving the nickel recovery ratio during a hydrogen reduction, a sodium compound addition method has been proposed. However, there is a problem that an addition amount of the compound is enormous and chemical cost is too high to be industrially feasible.

Patent Document 1 discloses a method for producing reduced iron by reducing iron oxide charged into a shaft furnace. Specifically, a method of reducing iron oxide by blowing a heated mixed gas containing a reducing gas containing 90 vol% or more of hydrogen gas and nitrogen gas into a shaft furnace is shown. However, as described above, in the hydrogen reduction of nickel, the reduction degree is about 10% to 70%, which is significantly lower than 95% or more of the Elchem method as a conventional method. It is difficult to apply the hydrogen reduction method to the reduction in the CO₂ generation amount in smelting of a nickel-containing oxide ore, and there is a need to develop a method in which the nickel recovery ratio is high even when the hydrogen reduction method is applied and the cost is industrially suitable.

### Citation List

### Patent Document

Patent Document 1: International Publication No. WO2021/230307

### DISCLOSURE OF THE INVENTION

### Problems to be Solved by the Invention

The present invention has been made in view of such circumstances, and an object of the present invention is to provide a method for smelting a nickel-containing oxide ore having a reduced CO₂ generation amount and a high nickel recovery ratio.

### Means for Solving the Problems

The present inventors have conducted extensive studies in order to solve the above-described problems. As a result, the present inventors have found that a nickel reduction ratio can be improved by subjecting a nickel-containing oxide ore to a hydrogen reduction treatment and then subjecting the resulting reduced product to a melting treatment, arriving at the completion of the present invention.

A first aspect of the present invention relates to a method for smelting a nickel-containing oxide ore, the method including: a hydrogen reduction step of performing a reduction treatment while supplying a gas containing hydrogen as a reducing agent to a raw material which contains a nickel-containing oxide ore; a melting step of subjecting a reduced product obtained by the reduction step to a melting treatment; and a recovery step of separating a slag from a molten product obtained by the melting treatment and recovering a metal which contains nickel.

A second aspect of the present invention relates to the method for smelting a nickel-containing oxide ore as described in the first aspect, in which the nickel-containing oxide ore has an iron grade of 5 mass% or more and 30 mass% or less.

A third aspect of the present invention relates to the method for smelting a nickel-containing oxide ore as described in the first aspect, further including a heat treatment step of heat-treating the raw material which contains a nickel-containing oxide ore at a temperature of 300°C or higher and 1200°C or lower, in which the nickel-containing oxide ore, which is a heat-treated product obtained by the heat treatment, is subjected to a reduction treatment in the hydrogen reduction step.

A fourth aspect of the present invention is the method for smelting a nickel-containing oxide ore as described in the first aspect, further including a pelletizing step of pelletizing the raw material which contains a nickel-containing oxide ore, in which the pelletized raw material is subjected to a reduction treatment in the hydrogen reduction step.

A fifth aspect of the present invention relates to the method for smelting a nickel-containing oxide ore as described in the fourth aspect, in which a pellet has a diameter of 5 mm or more and 50 mm or less.

A sixth aspect of the present invention relates to the method for smelting a nickel-containing oxide ore as described in the fourth aspect, further including a heat treatment step of heat-treating the raw material pelletized in the pelletizing step at a temperature of 300°C or higher and 1200°C or lower, in which the pellet which is a heat-treated product obtained by the heat treatment is subjected to the reduction treatment in the hydrogen reduction step.

A seventh aspect of the present invention is the method for smelting a nickel oxide ore as described in the first aspect, in which the reduction is performed on the raw material in the hydrogen reduction step while supplying the gas containing hydrogen as the reducing agent from below.

An eighth aspect of the present invention relates to the method for smelting a nickel-containing oxide ore as described in the seventh invention, in which in the hydrogen reduction step, the raw material is supplied downward from the top.

A ninth aspect of the present invention is the method for smelting a nickel-containing oxide ore as described in the first aspect, in which a melting treatment product which contains the reduced product produced during the melting treatment in the melting step has a MgO/SiO₂ mass ratio of 0.5 or more and 0.7 or less.

### Effects of the Invention

According to the present invention, it is possible to provide a method for smelting a nickel-containing oxide ore having a reduced CO₂ generation amount and a high nickel recovery ratio.

### BRIEF DESCRIPTION OF THE DRAWINGS

FIG. 1 is a process diagram showing an example of a flow of a smelting method of a nickel-containing oxide ore;
FIG. 2 is a schematic view of a test apparatus used in Example 1;
FIG. 3 is a photograph of a sample collected in Example 1;
FIG. 4 is a schematic view of a test apparatus used in Example 2; and
FIG. 5 is a photograph of a sample collected in Example 2.

### PREFERRED MODE FOR CARRYING OUT THE INVENTION

Hereinafter, specific embodiments of the present invention (hereinafter also referred to as "embodiments") will be described in detail. It should be noted that the present invention is not limited to the following embodiments at all, and can be carried out with appropriate modifications without departing from the gist of the present invention.

The method according to the present embodiment is a smelting method for separating and recovering nickel from an oxide ore containing nickel (nickel-containing oxide ore).

A nickel-containing oxide ore as a raw material is not particularly limited, and examples thereof include a saprolite ore and a limonite ore. The nickel-containing oxide ore contains nickel oxide (NiO) and iron oxide (Fe₂O₃) as constituent components.

The nickel-containing oxide ore preferably has an iron grade of 5 mass% or more and 30 mass% or less. When the iron grade is less than 5% by mass, there is a possibility that an amount of iron to be reduced in the hydrogen reduction treatment in a hydrogen reduction step S3 decreases, which decreases an amount of metal iron contributing as the reducing agent in the melting treatment in a melting step S4, which does not improve the nickel reduction ratio, resulting in a decrease in the nickel recovery ratio. On the other hand, when the iron grade exceeds 30% by mass, there is a possibility that the nickel grade of metal nickel (alloy) to be recovered decreases and an amount of slag increases.

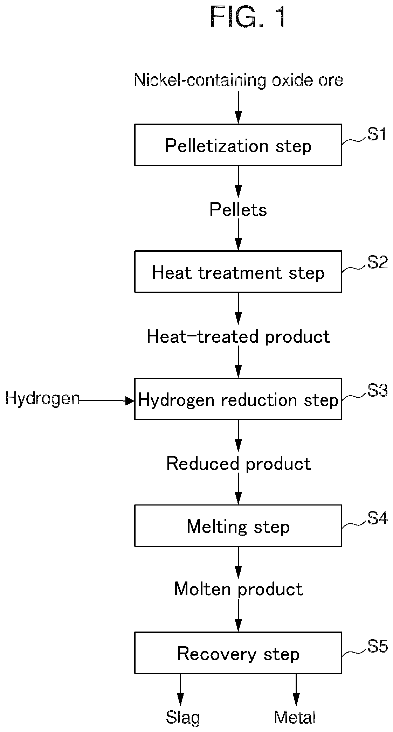

Specifically, FIG. 1 is a process diagram showing an example of a flow of the method for smelting a nickel-containing oxide ore according to the present embodiment. The feature of this method is including a hydrogen reduction step S3 of performing a reduction treatment while supplying hydrogen as a reducing agent to a raw material which contains a nickel-containing oxide ore, a melting step S4 of melting a reduced product obtained by the hydrogen reduction treatment, and a recovery step S5 of separating a slag from the molten product obtained by the melting treatment and recovering a metal which contains nickel.

Further, a pelletizing step S1 of pelletizing the raw material which contains a nickel-containing oxide ore may be provided, and in that case, the pelletized raw material is subjected to the reduction treatment in the hydrogen reduction step S3.

In addition, a heat treatment step S2 may be further provided prior to the hydrogen reduction step S3, where the raw material which contains a nickel-containing oxide ore or a pellet, when the raw material is pelletized in the pelletizing step, is heat-treated at a specific temperature.

As described above, by subjecting the nickel-containing oxide ore to a reduction treatment (hydrogen reduction treatment) using hydrogen as a reducing agent and then subjecting the obtained reduced product to a melting treatment, nickel contained in the nickel-containing oxide ore can be effectively reduced, enabling recovery of a metal containing nickel at a high nickel recovery ratio.

### [Pelletizing Step]

Although not an essential embodiment in the method according to the present embodiment, a pelletizing step S1 may be provided, where a raw material which contains a nickel-containing oxide ore is molded into pellets. As will be described later in detail, by pelletizing a raw material which contains a nickel-containing oxide ore, supplying a gas containing hydrogen to the raw material pellet to perform a reduction treatment, it is possible to suppress a proportion of carryover of the raw material together with unreacted hydrogen or together with an exhaust gas which contains water vapor after reaction.

The method of pelletizing the raw material is not particularly limited. For example, pellets can be obtained by forming a powder of nickel oxide ore as a raw material, adding moisture necessary for pelletization to the powder of the ore, and molding the powder into pellets having a predetermined size and shape by a known pellet manufacturing apparatus such as a tumbling granulator, a compression molding machine, or an extrusion molding machine. Alternatively, pellets may be formed by hand of an operator.

The shape of pellets is not particularly limited, but may be, for example, a spherical shape.

A size of a pellet is not particularly limited, but is preferably a size, for example, which allows the pellet (diameter in the case of a spherical pellet) to be charged into a reduction reaction vessel or the like in the hydrogen reduction step S3, such as about 5 mm or more and 50 mm or less. The size of a pellet is more preferably 8 mm or more and 40 mm or less, and still more preferably 10 mm or more and 35 mm or less.

When a reaction vessel for the reduction treatment is filled with pellets with a size of less than 5 mm, gaps between the pellets decrease due to too small diameter of the pellets or breakage of the pellets having a small diameter. This may hinder the passage of hydrogen gas as the reducing agent in some cases. In such a case, when the pressure of the supplied hydrogen gas exceeds a certain value, the raw material is pushed up at once, and a phenomenon in which most of the hydrogen gas escapes without reacting easily occurs. On the other hand, when the size of pellets exceeds 50 mm, gaps between the pellets become too large, so that the reduction reaction takes time, being incapable of achieving an efficient treatment.

Note that after the raw material which contains a nickel-containing oxide ore is pelletized, the pellets are preferably dried. In the pelletization of the raw material, when moisture necessary for the pelletization is added, the raw material is in a sticky state due to the added moisture. Thus, the moisture attached to the pellets can be removed by performing a drying treatment on the pellets from a viewpoint of easy handling thereafter. The drying treatment method is not particularly limited, and for example, a hot air at 300°C to 400°C can be blown against the pellets.

### [Heat Treatment Step]

In addition, although not an essential embodiment in the method according to the present embodiment, a heat treatment step S2 may be provided, where a raw material which contains a nickel-containing oxide ore is heat-treated at a specific temperature in advance. When the heat treatment is performed on the raw material by providing the heat treatment step S2, the obtained heat-treated product is subjected to the reduction treatment in the hydrogen reduction step S3 as the next step. When the above-described pelletizing step S1 is performed to pelletize the raw material, the pelletized raw material (raw material pellet) is heat-treated at a specific temperature.

Specifically, in the heat treatment step S2, the raw material which contains a nickel-containing oxide ore is heat-treated by raising the temperature to 300°C or higher and 1200°C or lower. The heat treatment is a pre-treatment performed prior to a subsequent hydrogen reduction treatment step (hydrogen reduction step S3) and a melting step (melting step S4) of further melting the reduced product. As described above, crystal water contained in the nickel-containing oxide ore can be removed by performing the heat treatment on the nickel-containing oxide ore.

The heat treatment is performed under the temperature condition of 300°C or higher and 1200°C or lower as described above. When the heat treatment temperature exceeds 1200°C, a fayalite slag may be generated before metal iron contained in the nickel-containing oxide ore is generated during the hydrogen reduction treatment in the next hydrogen reduction step S3. If a fayalite slag is generated, an amount of metal iron contributing as a reducing agent in the melting step S4 may decrease, and the nickel reduction ratio may not be improved. On the other hand, when the heat treatment temperature is lower than 300°C, the reduction reaction in the hydrogen reduction step S3 or removal of crystal water contained in the nickel-containing oxide ore may be hindered, resulting in a decrease in the nickel reduction ratio.

The heat treatment temperature is more preferably set to a range of 400°C or higher and 1000°C or lower. Preferably, by performing the heat treatment in such a temperature range, most of the crystal water contained in the nickel-containing oxide ore can be effectively removed, and an increase in energy cost can be suppressed.

### [Hydrogen Reduction Step]

The method according to the present embodiment includes a hydrogen reduction step S3, where a reduction treatment (hydrogen reduction treatment) is carried out while supplying a gas containing hydrogen as a reducing agent to a raw material which contains a nickel-containing oxide ore. When the above-described pelletizing step S1 is provided to pelletize the raw material, the hydrogen reduction treatment is performed on the pelletized raw material (raw material pellets). When the heat treatment step S2 is provided to heat-treat a nickel-containing oxide ore as the raw material, the hydrogen reduction treatment is performed on the obtained heat-treated product.

As described above, by performing the hydrogen reduction treatment on the nickel-containing oxide ore, nickel in the nickel-containing oxide ore is reduced to metal, as well as almost all or all of iron which is present as a trivalent oxide is reduced to a divalent oxide, and some of the divalent iron oxide is further reduced to metal.

The reduction treatment using hydrogen as a reducing agent becomes a treatment using a carbon neutral reducing agent, which can effectively decrease a CO₂ generation amount as compared with a conventional technique.

In the hydrogen reduction treatment, it is preferable to treat the raw material by supplying a gas (supply gas) containing hydrogen as a reducing agent from below. By supplying hydrogen to the raw material from below as described above, it is possible to suppress a proportion of carryover of the raw material together with unreacted hydrogen or together with an exhaust gas containing water vapor after the reaction. In addition, the generated exhaust gas can be guided upward by supplying hydrogen to the raw material from below. As a result, a supply gas having a high hydrogen concentration can be introduced into a site where a concentration of nickel oxide is low, and a supply gas having a low hydrogen concentration can be introduced into a site where the concentration of nickel oxide is high, so that the reduction reaction can proceed efficiently.

Further, in a case where the gas containing hydrogen has a gas temperature equal to or higher than a certain temperature, a gas flow that rises due to the high temperature occurs. Therefore, supplying a gas to the raw material from below can form a smoother gas flow. As a result, a supplied gas or an exhaust gas can efficiently flow, and the hydrogen reduction reaction can more efficiently proceed.

In the hydrogen reduction treatment, it is preferable to supply and discharge the raw material downward from the top in the reduction reaction vessel. As described above, by supplying the raw material from the top to the bottom, opposite to the supply direction of a gas containing hydrogen (that is, a direction from the bottom to the top), the raw material can be brought into contact with the gas containing hydrogen as a reducing agent in a countercurrent manner, whereby the reduction reaction proceeds more efficiently. That is, as described above, by supplying a gas containing hydrogen from below to the raw material supplied downward from the top to guide an exhaust gas upward, it is possible to introduce a supplied gas having a high hydrogen concentration into a site where the concentration of nickel oxide is low, and it is possible to introduce a supplied gas having a low hydrogen concentration into a site where the concentration of nickel oxide is high.

An amount of hydrogen to be supplied in the hydrogen reduction treatment is preferably 1.2 times or more an amount of hydrogen necessary for reducing iron and nickel in the nickel-containing oxide ore. If the amount of hydrogen to be supplied is less than 1.2 times the necessary amount of hydrogen described above, reduction may be insufficient. The upper limit of the amount of hydrogen to be supplied is not particularly limited, and is preferably set as appropriate in consideration of a supply cost of hydrogen, the form of contact between the raw material and hydrogen in the reaction vessel (that is, reaction efficiency), and the like.

The reduction reaction vessel to be used in the hydrogen reduction treatment is not particularly limited. Any apparatus may be used as long as it can supply a gas containing hydrogen to a raw material from below and can perform the reduction treatment on the raw material, as in the apparatus used in Examples described below. For example, a vertical shaft furnace or the like can be used.

As described above, in the hydrogen reduction treatment for nickel-containing oxide ores, the reduction ratio to metal nickel is generally lower than that in the Elchem method. In this regard, in the method according to the present embodiment, since the hydrogen reduction treatment is performed on the nickel-containing oxide ore and then the melting treatment (melting step S4) is performed on the obtained reduced product, the nickel reduction ratio can be improved.

### [Melting Step]

In the melting step S4, the reduced product obtained by the hydrogen reduction treatment is charged into, for example, an electric furnace or the like to be melted. As described above, the nickel reduction ratio can be improved by subjecting the obtained reduced product (hydrogen reduction product) to the melting treatment.

Nickel is more likely to be reduced than iron. Therefore, by subjecting the hydrogen reduction product to the melting treatment, the nickel oxide remaining unreacted even after the hydrogen reduction treatment and the reduced metal iron come into contact with each other, and the oxygen substitution reaction as shown in the following formula [1] occurs, and the nickel oxide is reduced to metal nickel. That is, metal iron, which is a reduced product of iron, can effectively act as a reducing agent and can reduce nickel oxide. Fe + NiO → Ni + FeO · · · Formula [1]

That is, since a sample after the hydrogen reduction is in a solid state, the reaction of the above formula [1] is very difficult to proceed. However, upon melting the hydrogen reduction product, the metal in the slag comes to easily move, whereby the reaction of the formula [1] is promoted. As a result, a nickel metallization ratio is increased, and a nickel recovery ratio to be recovered through the treatment in the melting step S4 can be improved.

In the melting treatment, the temperature condition is not particularly limited as long as the hydrogen reduction product can be melted, but is preferably 1400°C or higher and 1600°C or lower, for example. When the melting temperature is set to 1400°C or higher, a slag having good properties can be obtained, and the slag and the metal can be efficiently separated from each other. Further, by setting the melting temperature to 1600°C or lower, it is possible to suppress damage/wear and energy cost of refractories which constitute the melting furnace.

Here, as described above, the nickel-containing oxide ore as the raw material to be used in the method according to the present embodiment preferably has an iron grade of 5 mass% or more and 30 mass% or less. When the iron grade is less than 5% by mass, an amount of iron to be reduced during the reduction in the hydrogen reduction step S3 decreases, which decreases an amount of metal iron contributing as the reducing agent during melting in the melting step S4, resulting in a possibility that the nickel recovery ratio decreases.

In the melting treatment, the melting treatment product which contains the reduced product to be melted preferably has a MgO/SiO₂ mass ratio of 0.5 or more and 0.7 or less. The MgO/SiO₂ mass ratio of less than 0.5 or more than 0.7 may increase the melting point of slag.

It is preferable to prepare a raw material to be treated and subject the raw material to the melting treatment so that the MgO/SiO₂ mass ratio in the melting treatment is included in the above-described range. In the melting treatment, a flux such as SiO₂ may be added. In that case, an amount of flux to be added should be decided by considering that the MgO/SiO₂ mass ratio in the melting treatment product is to be included in the above-described range. Note that a flux can lower the melting temperature of slag, whereby sedimentation of the metal (metal nickel) in the slag is promoted.

### [Recovery Step]

In the recovery step S5, a slag is separated from the molten product obtained by the melting treatment, and the metal (alloy) containing nickel is recovered. For example, in a molten product obtained by melting a reduced product in an electric furnace or the like, a slag and a metal are separated (specific gravity separation) into an upper layer and a lower layer, respectively, by specific gravities. The metal containing nickel separated from the slag can be efficiently recovered by performing an operation such as tapping from a metal hole provided in a side wall of the furnace.

All or a plurality of steps of the heat treatment step S2, the hydrogen reduction step S3, the melting step S4, and the recovery step S5 described above can be carried out by using one furnace and compartmentalizing the furnace into different zones. Alternatively, they may be performed in a batch mode. For example, a shaft furnace or a blast furnace is used, and the furnace is compartmentalized into zones where each treatment of the heat treatment step S2, the hydrogen reduction step S3, the melting step S4, and the recovery step S5 is performed in this order from the upper layer so that, finally, the slag and the metal separate according to the specific gravities in the portion of the furnace bottom where a molten product can be stored.

### EXAMPLES

Hereinafter, Examples of the present invention will be described in more detail, but the present invention is not limited to the following Examples.

### [Example 1]

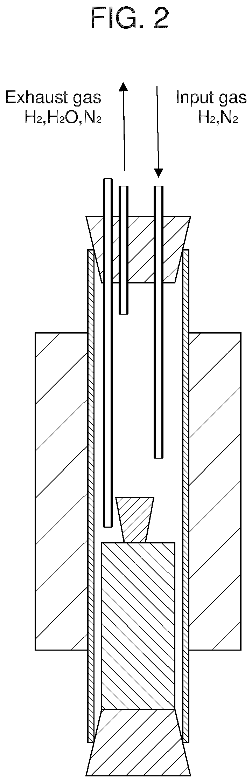

Using the test apparatus shown in the schematic diagram of FIG. 2, a nickel-containing oxide ore (saprolite) having a composition shown in Table 1 below was charged into an alumina crucible, heated to 800°C in a nitrogen atmosphere, and then held for 120 minutes while flowing hydrogen having a concentration of 100% to perform a reduction treatment (hydrogen reduction treatment). After the hydrogen reduction treatment, the obtained sample (reduced product sample) was collected. An amount of hydrogen supplied was set to a large excess amount of 10 times or more an amount necessary for reducing nickel and iron in the nickel-containing oxide ore. A sample thickness in the crucible was set to a thickness at which hydrogen diffused to the bottom of the sample, the thickness being obtained by a preliminary test.

**[Table 1]**

| (Mass%) | Ni | Fe | Co | MgO | SiO₂ | S | Al₂O₃ |
|---|---|---|---|---|---|---|---|
| Nickel-containing oxide ore | 1.8 | 15 | 0.06 | 24 | 35 | 0.02 | 1.5 |

The recovered reduced product sample was charged into an alumina crucible together with a small amount of flux (SiO₂) and heated to 1550°C in a nitrogen atmosphere to melt the reduced product sample. The mixture was held for 30 minutes to perform the melting treatment, and then cooled to collect a generated slag and a metal formed in a button shape. Note that SiO₂ as a flux was added to decrease the melting temperature of the slag to promote sedimentation of the metal (metal nickel) in the slag. The amount of flux to be added was set to an amount, with which the MgO/SiO₂ mass ratio in the sample to be melted containing the reduced product was 0.6.

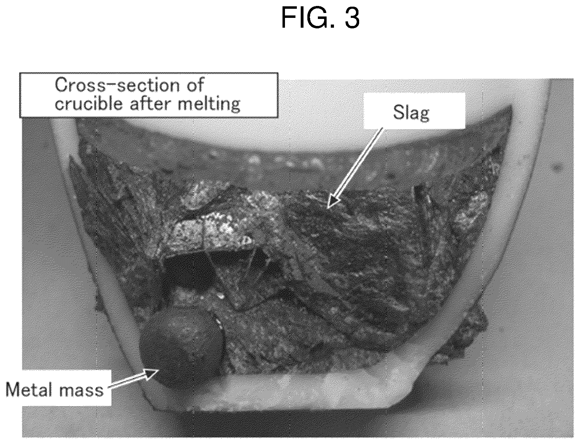

FIG. 3 is a photograph showing a state of a collected sample. As shown in the photograph of FIG. 3, the slag was melted, and no metal was visually observed in the slag. It can be seen that the metal was obtained as a mass in the form of a button shape.

Table 2 below shows the weight of the obtained metal and the results of the metallization ratio calculated from chemical analysis by ICP. As shown in Table 2, the obtained nickel had a high nickel metallization ratio of 90% or more. It should be noted that the metallization ratio is represented by a percentage of a mass of the recovered metal nickel (or metal iron) with respect to a mass of nickel (or iron) contained in the nickel-containing oxide ore as a raw material.

**[Table 2]**

| | Metallization ratio (%) | |
|---|---|---|
| | Ni | Fe |
| Sample after hydrogen reduction + melting treatment | 92 | 7 |

Table 3 below shows the metallization ratio calculated by chemical analysis of the reduced product sample after the hydrogen reduction treatment (before the melting treatment). As shown in Table 2, the nickel metallization ratio was significantly increased and the metallization ratio of iron was decreased as compared with the results shown in Table 3 below. From this result, it can be confirmed that the reaction of the above formula [1] occurred.

**[Table 3]**

| | Metallization ratio (%) | |
|---|---|---|
| | Ni | Fe |
| Sample after hydrogen reduction | 5 | 14 |

As can be seen from the results shown in Tables 2 and 3, in the recovery of nickel from the nickel-containing oxide ore, it was confirmed that, by performing the melting treatment after the hydrogen reduction treatment, a high nickel recovery ratio, for example, 90% or more, could be achieved even by the hydrogen reduction treatment, that is, by the reduction with a carbon neutral reducing agent.

### [Example 2]

In the same manner as in Example 1, a nickel-containing oxide ore (saprolite ore) having the composition shown in Table 1 was used as the raw material, and water was added to a raw material powder thereof to form spherical pellets having a diameter of 10 mm.

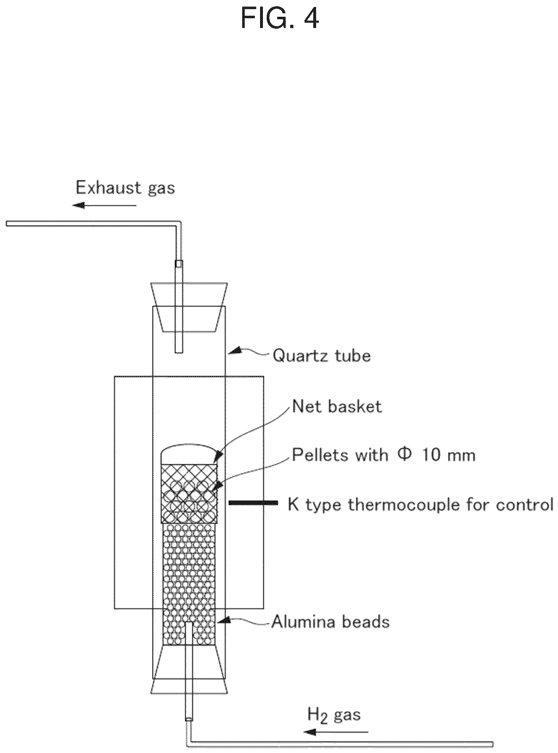

The obtained pellets (raw material pellets) were subjected to the hydrogen reduction treatment using a test apparatus shown in the schematic diagram of FIG. 4. Specifically, the raw material pellets were charged into a net basket, heated to 800°C in a nitrogen atmosphere, and then subjected to a reduction treatment (hydrogen reduction treatment) for 120 minutes while hydrogen having a concentration of 100% was allowed to flow through the raw material pellets in the net basket from below. After the hydrogen reduction treatment, the obtained sample (reduced product sample) was collected. An amount of hydrogen supplied was set to a large excess amount of 10 times or more an amount necessary for reducing nickel and iron in the nickel-containing oxide ore.

The recovered reduced product sample was charged into an alumina crucible together with a small amount of flux (SiO₂) and heated to 1550°C in a nitrogen atmosphere to melt it. The mixture was held for 30 minutes to perform the melting treatment, and then cooled to collect a generated slag and a metal formed in a button shape. Note that SiO₂ as a flux was added to decrease the melting temperature of the slag to promote sedimentation of the metal (metal nickel) in the slag. The amount of flux to be added was set to an amount, with which the MgO/SiO₂ mass ratio in the sample to be melted containing the reduced product was 0.6.

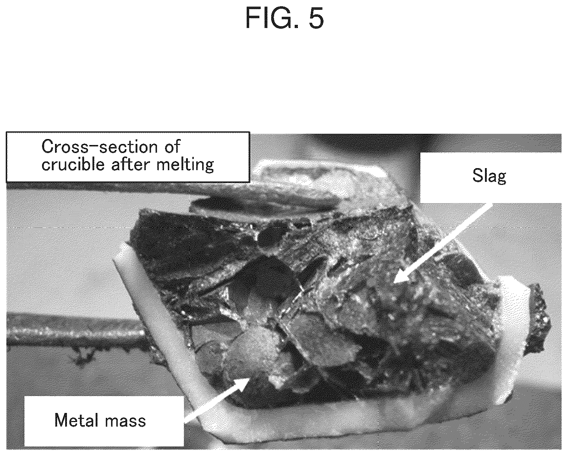

FIG. 5 is a photograph showing a state of a sample collected via the melting treatment. As shown in the photograph of FIG. 5, the slag was melted, and no metal was visually observed in the slag. It can be seen that the metal was obtained as mass in the form of button shape.

Table 4 below shows the weight of the obtained metal and the results of the metallization ratio calculated from chemical analysis by ICP. As shown in Table 4, the obtained nickel had a high nickel metallization ratio of 90% or more. It should be noted that the metallization ratio is represented by a percentage of a mass of the recovered metal nickel (or metal iron) with respect to a mass of nickel (or iron) contained in the nickel-containing oxide ore as a raw material.

**[Table 4]**

| | Metallization ratio (%) | |
|---|---|---|
| | Ni | Fe |
| Sample after hydrogen reduction treatment to raw pellets + melting treatment | 92.9 | 5.5 |

Table 5 below shows the metallization ratio calculated by chemical analysis of the reduced product sample after the hydrogen reduction treatment (before the melting treatment). As shown in Table 4, as compared with the results shown in Table 5 below, the nickel metallization ratio was significantly increased and the metallization ratio of iron was decreased. From this result, it can be confirmed that the reaction of the above formula [1] occurred.

**[Table 5]**

| | Metallization ratio (%) | |
|---|---|---|
| | Ni | Fe |
| Sample after hydrogen reduction treatment to raw pellets | 3 | 8.4 |

As can be seen from the results shown in Tables 4 and 5, in the recovery of nickel from the nickel-containing oxide ore, by pelletizing a raw material which contains a nickel-containing oxide ore, subjecting the raw material pellet to the hydrogen reduction treatment, and then, to the melting treatment, it was confirmed that a high nickel recovery ratio, for example, 90% or more, could be achieved even by the hydrogen reduction treatment, that is, by reduction with a carbon neutral reducing agent.

### [Comparative Example 1]

In Comparative Example 1, the nickel-containing oxide ore was subjected to hydrogen reduction at a temperature of 800°C in the same manner as in Example 1. Thereafter, the obtained reduced product sample was pulverized by a vibration mill, and the metal content was analyzed by a bromine methanol method. That is, in Comparative Example 1, unlike Example 1, the melting treatment was not performed after the hydrogen reduction.

As a result, as shown in Table 3 above, the nickel metallization ratio was about 5%. It should be noted that even if all of the metal had been recovered, the method of Comparative Example 1 would have been industrially unfeasible.

### [Comparative Example 2]

In Comparative Example 2, a raw material which contained a nickel-containing oxide ore was pelletized in the same manner as in Example 2, and the raw material pellets were subjected to the hydrogen reduction at a temperature of 800°C. Thereafter, the obtained reduced product sample was pulverized by a vibration mill, and the metal content was analyzed by a bromine methanol method. That is, in Comparative Example 1, unlike Example 2, the melting treatment was not performed after the hydrogen reduction.

As a result, as shown in Table 5 above, the nickel metallization ratio was about 3%. It should be noted that even if all of the metal had been recovered, the method of Comparative Example 2 would have been industrially unfeasible.

## Claims

1. A method for smelting a nickel-containing oxide ore, the method comprising:
a hydrogen reduction step of performing a reduction treatment while supplying a gas containing hydrogen as a reducing agent to a raw material which comprises a nickel-containing oxide ore;
a melting step of subjecting a reduced product obtained by the reduction step to a melting treatment; and
a recovery step of separating a slag from a molten product obtained by the melting treatment and recovering a metal which contains nickel.

2. The method for smelting a nickel-containing oxide according to claim 1,
wherein the nickel-containing oxide ore has an iron grade of 5 mass% or more and 30 mass% or less.

3. The method for smelting a nickel-containing oxide ore according to claim 1,
further comprising a heat treatment step of heat-treating the raw material which contains a nickel-containing oxide ore at a temperature of 300°C or higher and 1200°C or lower,
wherein the nickel-containing oxide ore, which is a heat-treated product obtained by the heat treatment, is subjected to a reduction treatment in the hydrogen reduction step.

4. The method for smelting a nickel-containing oxide ore according to claim 1,
further comprising a pelletizing step of pelletizing the raw material which contains a nickel-containing oxide ore,
wherein the pelletized raw material is subjected to a reduction treatment in the hydrogen reduction step.

5. The method for smelting a nickel-containing oxide ore according to claim 4,
wherein a pellet has a diameter of 5 mm or more and 50 mm or less.

6. The method for smelting a nickel-containing oxide ore according to claim 4,
further comprising a heat treatment step of heat-treating the raw material pelletized in the pelletizing step at a temperature of 300°C or higher and 1200°C or lower,
wherein the pellet which is a heat-treated product obtained by the heat treatment is subjected to the reduction treatment in the hydrogen reduction step.

7. The method for smelting a nickel oxide ore according to claim 1,
wherein the reduction is performed on the raw material in the hydrogen reducing step while supplying the gas containing hydrogen as the reducing agent from below.

8. The method for smelting a nickel-containing oxide ore according to claim 7,
wherein in the hydrogen reduction step, the raw material is supplied downward from a top.

9. The method for smelting a nickel-containing oxide ore according to claim 1,
wherein a melting treatment product which contains the reduced product produced during the melting treatment in the melting step has a MgO/SiO₂ mass ratio of 0.5 or more and 0.7 or less.
